# EUROPEAN PATENT APPLICATION

(11) **EP 1 059 815 A2**
(43) Date of publication of application: **13.12.2000**
(21) Application number: 00650063.1
(22) Date of filing: 02.06.2000
(51) Int. Cl.: H04Q 3/00, H04L 12/66

(54) **Method and device for communication between switches of different types**

(30) Priority: 07.06.1999 US 326645
(71) Applicant: Nortel Networks Limited, Montreal, Quebec H2Y 3Y4 (CA)
(72) Inventor: Rogers, Shane M., Calgary, Alberta T2W 1Z9 (CA); Dowser, Michael Todd, Greely, Ontario K4P 1G4 (CA); Wellard, Ronald R., Kanta, Ontario K2K (CA)
(74) Representative: Coyle, Philip Aidan

(57) **Abstract**

The invention provides a method and an apparatus for controlling the establishment of a communication link between two parties connected to switches of different types, such as a circuit switch and a packet switch. The apparatus includes a call manager (332) common to the different switches for selectively establishing the intra-switch connection paths in each switch in order to set-up a communication link between the two parties. An inter-switch data channel allows data to be exchanged between switches of different types such as to complete the communication link.

## Description

### FIELD OF THE INVENTION

This invention relates to telecommunication devices, in particular telecommunication devices utilizing a switch to selectively establish a connection path between two parties permitting the exchange of information such as voice or data. It is particularly applicable to multi-switch environments, where the switches are of different types, such as circuit switches and packet switches.

### BACKGROUND OF THE INVENTION

Circuit switching and packet switching are different and well known methods for establishing a connection between two parties to permit the exchange of voice or data signals. In the dial-up telephone network, for example, a caller's line goes to a switching center or switch, where the actual connection is made to the called party. In the case of a circuit switch a permanent connection is set-up and maintained for the duration of the call. A packet switch does not establish a permanent connection, rather the information is assembled in packets that are transmitted rapidly over a channel dedicated to the connection only for the duration of the packet's transmission.

It is often necessary to allow the different switching domains to interoperate. This permits a call originating in a circuit-switching domain to terminate or transit through a packet switched domain. The current state of the art provides such interoperability between different switching domains through the use of a gateway. A gateway provides an interface between two switching domains by carrying both signaling information and data from one domain to the other domain. The use of a gateway is not particularly advantageous because in many instances a certain functionality associated to a call in one of the switching domains cannot be maintained when the call passes in another switching domain. For example, if in the circuit switched domain the functionality of « call waiting » is available, it will not necessarily be available in the packet switched domain because the gateway may not have the ability to adequately translate high level functions from one domain to another domain. This is due to the fact that the gateway has no direct control of the switches in either domain. The gateway only receives signaling information and data and can perform low level protocol translation. This allows to adequately transfer the basic functionality of a call from one switching domain to another switching domain but high level functions are often lost.

Therefore, there is a need in the industry to improve the interoperability between different switching domains in a communication network.

### Summary of the Invention

In one aspect, the invention provides an apparatus for controlling the establishment of a communication link between two parties connected to switches of different types, such as a circuit switch and a packet switch. The apparatus comprises a call manager unit that exchanges control information with the switches, which permits setting up respective connection paths through the switches. In a specific example, the apparatus also comprises a data-switching unit responsive to the exchange of control information between the call manager unit and the switches to provide an inter-switch channel between the connection paths such that data from one switch can travel to the other switch.

Preferably, the call manager unit transports control information separately from the data transported by the data-switching unit.

In one possible form of implementation the apparatus can be part of a PBX (Private Branch Exchange) system.

In another possible form of implementation the apparatus can be part of a key telephone system.

According to another aspect, the invention provides a telecommunication apparatus for establishing a communication link between two parties. The apparatus includes at least two switches of different types, such as a circuit switch and a packet switch. A call manager is controlling both switches in order to allow selectively setting up connection paths in the respective switches. An inter-switch data channel connects the switches, allowing to exchange data between the connection paths set by the control manager.

According to yet another aspect, the invention provides a method for establishing a communication link to transport data between two parties connected to switches that are of different types, such as a circuit switch and a packet switch. The method comprises providing a call manager common to the switches of different types, causing the call manager to selectively set connection paths in the switches of different types and completing the communication link by transporting data between the connection paths set in the switches of different type.

According to another aspect of the invention, the invention provides a machine readable medium containing a program element suitable for execution on a computer having a memory. The program element implements the functionality of the call manager discussed above.

For the purpose of this specification, the expression "terminal" is used to designate any end point device in a communication network.

Other aspects and features of the present invention will become apparent to those ordinarily skilled in the art upon review of the following description of specific embodiments of the invention in conjunction with the accompanying figures.

### Brief description of the drawings

- Fig. 1: shows a prior art network allowing a communication link between two parties to span different switching domains;
- Fig. 2: show block diagrams of a telecommunication apparatus for establishing a communication link between two parties according to the invention;
- Fig. 3: is a flow chart illustrating the operation of the apparatus of figure 2;

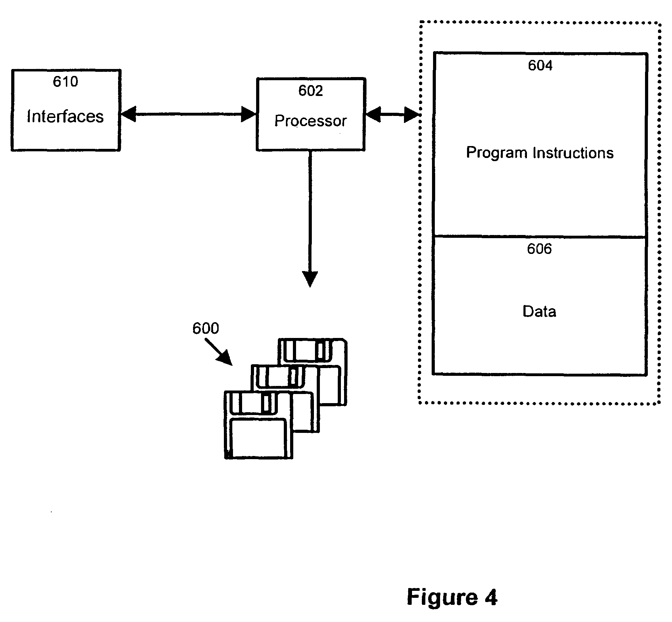

- Fig. 4: shows a block diagram of a computing device that can be used to implement the apparatus of figure 2.

### Detailed Description

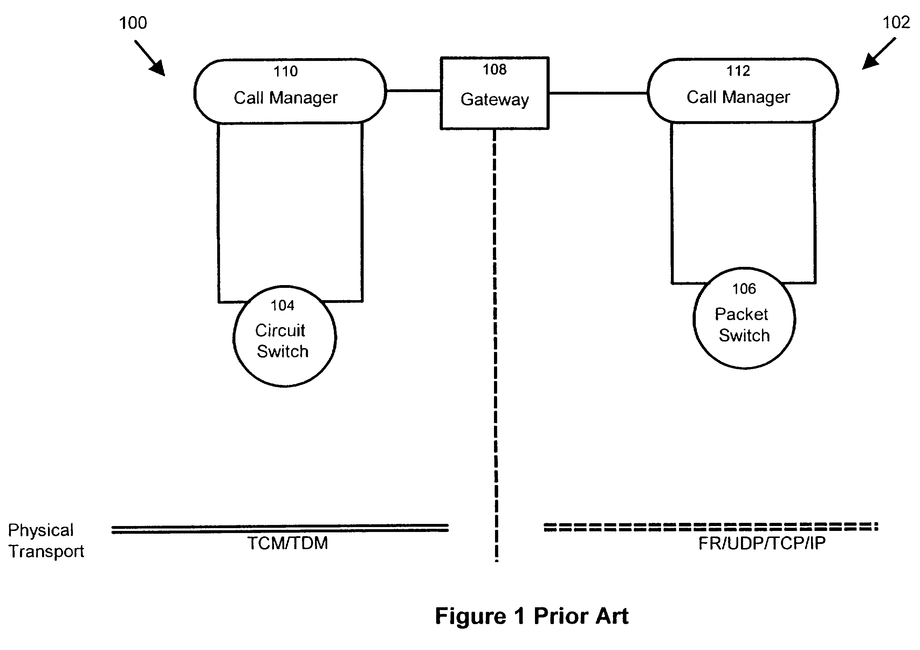

A typical prior art telecommunication network, as shown in figure 1, can be functionally divided in different domains based on the attributes of the switches used in the network. In the example shown in the drawings, the telecommunication network is constituted by two switching domains 100 and 102, each switching domain including at least one switch of a particular type. For instance, the switching domain 100 includes at least one circuit switched device, called hereinafter circuit switch 104. The switching domain 102 includes a packet switched device hereinafter called a packet switch 106. The switching domains communicate with one another through a gateway 108. Each switch 104 and 106 is controlled by a respective call manager 110 and 112. As it is well known to those skilled in the art the function of a call manager is to control the operation of each switch, which, among other functions involves selectively setting in each switch a communication path in order to connect two parties. Assume for instance that party A is connected to the circuit switch 104 and party B is connected to the packet switch 106. The call manager 110 will set in the circuit switch 104 a connection path allowing the data, such as a voice signal that can be digitized or in analog format, or a data stream (in the case of a data terminal to a data terminal communication) to travel through the switch. The same operation is effected at the level of the packet switch 106 by the call manager 112 and a communication path is set in the packet switch 106. To complete the communication link between the two switching domains, the signaling information and the data transit through the gateway 108 that effects the proper translations.

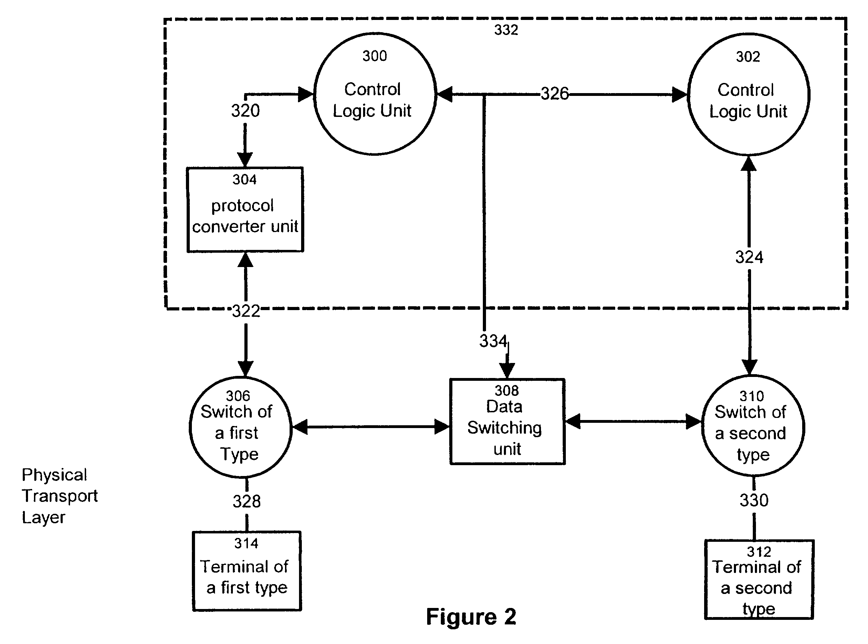

The present invention differs significantly from the arrangement illustrated in figure 1. A specific example of the present invention is shown in figure 2 that depicts a telecommunication apparatus for establishing a communication link between two parties over two switching domains of different types. The communication apparatus is comprised of a call manager unit 332, a data switching unit 308, and switches of different types 306, 310. In particular, the switch 306 that is of a first type is a circuit switch while the switch 310 that is of a second type is a packet switch. The terminals 314 312, such as a telephone, fax or computer node, are connected to their respective switches 306 310 via physical transport layers 328 330. The terminals are not, strictly speaking, part of the telecommunication apparatus.

The physical transport layers 328 330 provide a medium allowing an exchange of electronic signals between the terminals 314 312 and their respective switches 306 310 where the electronic information may be signaling information or data. The physical transport layer may be a cable, optical fiber, or a wireless connection among others. Typically, each physical transport layer effects the exchange of information according to a certain protocol such as for example time division multiplexing (TDM), time compression multiplexing (TCM), frame relay (FR), user data protocol (UDP) and TCP/IP. Other protocols may be used here without detracting from the spirit of the invention.

The switches 306 310 are concerned with directing the data received from the associated terminal 314, 310 to an output point of where the data can continue toward its intended destination. Examples of switch types are circuit switches and packet switches. Other types of switches may also be used without departing from the spirit of the invention.

The switch of a first type 306 has a port providing a connection to the transport layer 328 for receiving signaling information and data, a port allowing a connection to a data switching unit 308 to exchange data with the switch of the second type 310, and a port for connection to a call manager 332 for exchanging control information with the call manager 332. In a specific example, the switch of a first type is a circuit switch.

The switch of the second type 310 has a port providing a connection to the transport layer 330 for receiving signaling information and data, a port for providing a connection to a data switching unit 308 to exchange data with the switch 306 and a port allowing a connection to the call manager 332 for exchanging control information with the call manager 332. In a specific example, the switch of a second type is a packet switch.

In the example shown in figure 2, the call manager communicates with each switch by using a distinct control protocol. For example, if the switch of a first type 306 is a circuit switch, the control information exchanged between the switch 306 and the call manager 332 may be any suitable low-level stimulus protocol. It is not deemed necessary to describe in detail the low-level stimulus protocol because such protocol would be well known to a person skilled in the art. If the switch of the second type 310 is a packet switch, the control information exchanged with the call manager 332 is any suitable virtual device protocol. In a specific example, the virtual device protocol is the media gateway control protocol (MGCP). It will be plain to a person skilled in the art that other protocols may be used without departing from the spirit of the invention.

In the example shown in figure 2, the call manager 332 provides a single, homogeneous control entity for both switches 314 and 310. One of the specific controlling functions of the call manager 332 is to selectively set in each switch a connection path allowing a communication link to be established between the terminals 314 and 312 through the data switching unit 308. Generally speaking, the call manager 323 interacts directly with the switches 306 and 310 in order to achieve a certain functionality, such as routing a call between the terminal of a first type 314 and the terminal of a second type 312. This allows to expand the services that span different switching domains, in contrast to the arrangement of figure 1, where each switch in a specific switching domain uses a dedicated call manager.

The call manager unit 332 has a port for exchanging control information 322 with the switch of a first type 306 and a port 324 for exchanging signaling information with a switch of a second type 310. In a specific example, the call manager 332 comprises control logic functional units 300 302, associated with the respective switches 306 and 310. The control logic functional units 300 302 allow each switch to functionally co-exist at the call manager 332 level. Specifically, a given control logic functional unit is responsible for negotiating with a peer control function unit in order to set up connection paths in the respective switches 306, 310. A common call control protocol is used in this negotiation that is shared by all the control logic functional units. Preferably, a functional call protocol is used between the control logic units 300 302. In a specific example, the functional call protocol used between the control logic units 300 302 is the Q.931 standard protocol. TheQ.931 standard protocol is well know in the art to which this invention pertains and will not be described further. Other protocols may be used without departing from the spirit of the invention. In a preferred implementation, the control logic units 300 302 represent the individual terminals and negotiate the connections on the individual terminals' behalf. As an example, the control logic units 300 302 negotiate the initial call set-up handshake on behalf of the entities having an interest in the call.

The control logic units 300 302 perform the conversion from the control information according to a given protocol received from the switches 306 310 into control information according to the functional call protocol. Preferably the control information exchanged between the switches 306, 310 and the control logic units 300, 302 is according to a format that is independent of the particular switch type. Optionally, the call manager unit 332 may comprise a protocol converter unit 304. The protocol converter unit 304 receives control information according to a switch type dependent protocol from a switch (here the switch of a first type) and translates it into a protocol that is independent of the switch type.

The protocol independent from the switch type is herein referred to as the common ground protocol. Thus, the protocol converter unit translates a switch type dependent protocol into a common ground protocol, and vice versa. In a specific example, the common ground protocol may be the media gateway control protocol (MGCP) or the session initiation protocol (SIP). The control information according to the common ground protocol is outputted at connection 320. The media gateway control protocol and the session initiation protocol (SIP) are well known in the art to which this invention pertains and will not be described further. The protocol converter unit 304 may be a constituent part of the call manager unit 332 or may be a separate component external to the call manager unit 332 connected between a switch and a port of the call manager unit 332 without detracting from the spirit of the invention. As a variant, the protocol converter 304 may be integrated to a switch such that the switch outputs control information according to the common ground protocol. This possibility is illustrated by the direct connection between the switch of a second type 310 and the call manager unit 332. In the embodiment shown in figure 2, the switch of a second type 310 outputs signaling information in the common ground protocol at connection 324 between the switch 324 and the call manager 323.

An inter-switch channel is established between the connection path established in the switch of the first type 306 and the connection path set in the switch of the second type 310. The inter-switch channel thereby completes the communication link between the terminals 314 and 312. Another attribute of the inter-switch channel is that it allows data to flow between the switch of the first type 306 and the switch of the second type 310 irrespective of the transport layer protocol used by each of the respective switches. In one possible implementation, the inter-switch channel may be established by a simple data carrier medium such as an electric signal carrier cable, an optic fiber or a wireless connection. In a preferred form of implementation, the inter-switch channel includes a data-switching unit that provides a routing capability between the two switches 306 and 310. When the switch 306 of the first type has a switch fabric with a plurality of data outputs and the switch of the second type 310 has a switch fabric with a plurality of data inputs, such routing capability allows to properly direct the data from the connection path set in one switch to the connection path set in the other switch. The call manager 323 manages the operation of the data-switching unit 308. In one implementation, the data switching unit 308 is a passive device that has access to the high level communication established between the various control logic functional units, as indicated by the arrow 334. When the data switching unit 308 senses by observing the exchange of information between the control logic functional units that a communication link is being set-up between two terminals, it configures itself according to the control parameters sent by the call manager 323 to the switches 306 and 310 to set the respective intra-switch connection paths, such that data issued from one intra-switch connection path is delivered to the other intra-switch connection path. Alternatively, the data switching unit 308 could be actively controlled by the control logic functional units 300 302 which actively set the inter-switch channel. Optionally, a protocol converter unit may be added between the control logic functional units 300 302 and the data switching unit 308 to allows them to exchange information.

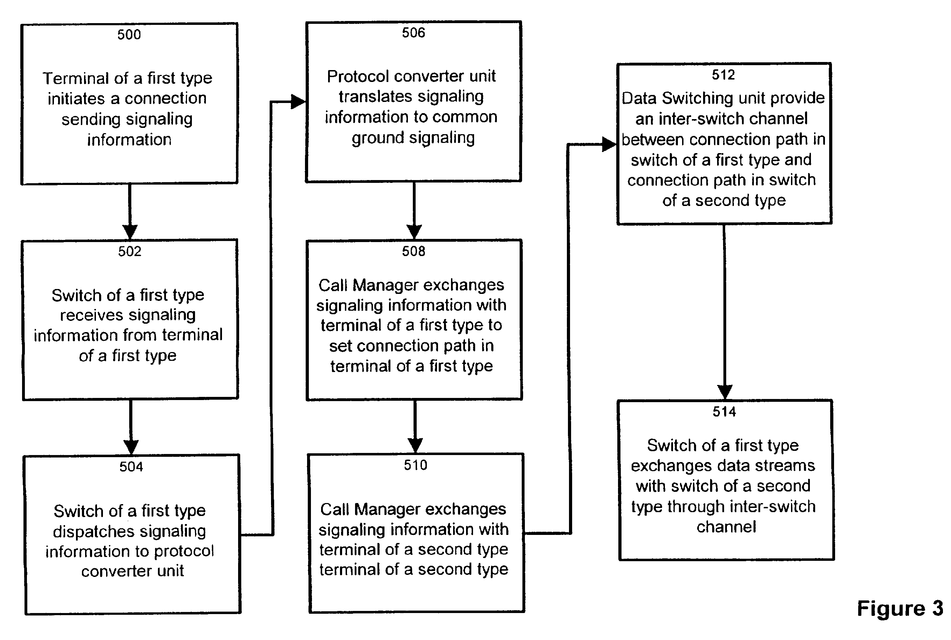

A specific example of the operation of the apparatus of figure 2 will now be described in conjunction with the flow chart of figure 3. The terminal of a first type 314 initiates a connection to the terminal of the second type 312 by sending signaling information 500 to the switch 306. The signaling information may include a signal identifying the destination of the communication, in this case the terminal of the second type 312, a signal identifying a certain functionality associated with the connection or other suitable signal. In a specific example, the signaling information includes an electronic representation of the digits of the telephone number of the terminal of the second type 312. The signaling information is sent over the transport layer to the switch of a first type. The switch of the first type 306 receives the signaling information 502 and dispatches it to the call manager unit 332.

The signaling information is encoded according to a protocol that is switch-dependent and in this example is specific to the switch of a first type. For example, if the switch of a first type is a circuit switch, the signaling information may be according to a command/status stimulus protocol.

The signaling information issued from the switch of the first type 306 is first processed by the protocol converter unit 504. The protocol converter unit translates 506 the signaling information from the switch dependent protocol to the common ground protocol. In the case where the switch-dependent protocol is the same as the common ground protocol, steps 504 and 506 may be omitted.

At step 508, the signaling information from the switch of the first type 306 is processed by the control logic functional unit 300 associated with that switch. The control logic functional unit 300 determines by examining the signaling information that a request for establishing a communication link is being formulated. In response to this observation the control logic functional unit 300 exchanges control information with the switch of the first type 306 (involving the downward protocol translation) to set in the switch of the first type 306 a connection path. Following this, the control logic functional unit 300 locates the control logic functional unit associated to the switch where the communication link terminates. This is effected by examining the digits entered on the keypad of the terminal of the first type 314. In this specific example, the communication link terminates on the switch of the second type 310.

The control logic functional unit 300 starts negotiating with the control logic functional unit 302, associated with the switch of the second type 310 such that a connection path can be set-up in the switch of the second type 310. The control logic functional unit 302 issues then control signals with the switch of the second type 310 to cause the necessary connection path to the established. The negotiation between the control logic functional units 300 and 302 is not limited to establishment of connection paths through the respective switches but also spans other functionality associated with the call, such as call redirection, conferencing and system page for example. If a certain functionality is desired or necessary, the control logic functional unit 300 communicates this to the control logic functional unit 302 and the latter makes the necessary settings in the switch of the second type 310 such as to implement this functionality. Accordingly, this high-level communication and negotiation allows to expand the interoperability between different switching domains.

In the next step 512, the data switching unit that observes the negotiations between the control logic functional unit 300 and the control logic functional unit 302 notices the establishment of the connection paths in the respective switches and the particulars of those connection paths. Accordingly it can set-up itself to complete the communication link by establishing a data inter-switch channel between the connection path in the switch of a first type and the connection path in the switch of a second type.

All the functional blocks of the apparatus depicted in figure 2, with the exception of the terminals 314 and 312 can be implemented in software on any suitable computing platform. Such computing platform typically includes a CPU 602 and a memory or computer readable medium 600 connected to the CPU 602 by a data communication bus. The memory stores the data 606 and the instructions of the program 604 implementing the functional blocks, namely the call manager 332, the switch of the first type 306, the switch of the second type 310 and the data switching unit 308. That program 604 operates on the data 606 in accordance with the algorithms to provide the functionality described above. The CPU 602 and memory 600 may also interact with interfaces 610 to receive and/or output data and signals, particularly with the terminals 314 and 312.

Although the present invention has been described in considerable detail with reference to certain preferred embodiments thereof, variations and refinements are possible without departing from the spirit of the invention as have been described throughout the document. Therefore, the scope of the invention should be limited only by the appended claims and their equivalents.

## Claims

1. An apparatus for controlling the establishment of a communication link between two parties connected to switches of different types, namely a switch of a first type and a switch of a second type, said apparatus comprising:
a) a call manager unit having:
- a first port for exchanging control information with a switch of a first type, the exchange of control information permitting the call manager unit to set a certain connection path through the switch of the first type;
- a second port for exchanging control information with a switch of a second type, the exchange of control information permitting the call manager unit to set a certain connection path through the switch of the second type;
b) an inter-switch data channel allowing to transport a data stream between the connection paths set in the switch of a first type and the switch of a second type.

2. An apparatus as defined in claim 1, further comprising a data switching unit having:
- a first port suitable for connection to the switch of a first type for exchanging data with the switch of a first type;
- a second port suitable for connection to the switch of a second type for exchanging data with the switch of a second type ;
said data switching unit being responsive to the exchange of signaling information between the call manager unit and the switch of a first type and the switch of a second type to provide the inter-switch data channel.

3. An apparatus as defined in claims 2, wherein said call manager unit transports signaling information separate from the data stream transported by the data switching unit.

4. An apparatus as defined in claim 1 wherein the switch of a first type is a circuit switch.

5. An apparatus as defined in claim 4 wherein the switch of a second type is a packet switch.

6. An apparatus as defined in claim 1, wherein the signaling information exchanged between the call manager unit and the switch of a first type and the signaling information exchanged between the call manager unit and the switch of a second type are according to different protocols.

7. An apparatus as defined in claim 6, wherein said signaling information exchanged with the switch of a first type is according to certain protocol, said signaling information exchanged with the switch of a second type is according to a common ground protocol, said call manager unit further comprising a protocol converter unit operative to convert signaling information in the certain protocol into signaling information according to a common ground protocol.

8. An apparatus as defined in claim 6, wherein said signaling information exchanged with the switch of a first type being according to a first certain protocol, said signaling information exchanged with the switch of a second type being according to a second certain protocol, said call manager unit further comprising:
- a first protocol converter unit operative to convert signaling information according to the first certain protocol to signaling information according to a common ground protocol;
- a second protocol converter unit operative to convert signaling information according to the second certain protocol to signaling information according to a common ground protocol.

9. A communication network comprising:
a) a switch of a first type;
b) a switch of a second type;
c) an apparatus as defined in claim 1.

10. A method for establishing a communication path from a switch of a first type and a switch of a second type, said method comprising:
- providing a call manager unit;
- exchanging with the call manager unit signaling information with said switch of a first type to selectively set a connection path through said switch of a first type;
- exchanging signaling with the call manager unit information with said switch of a second type to selectively set a connection path through said switch of a second type;
- transporting a data stream from the connection path in the switch of a first type to the connection path in the switch of a second type over an inter-switch channel separate from the call manager unit.

11. A method as defined in claim 10 wherein the switch of a first type is a circuit switch.

12. A method as defined in claim 11 wherein the switch of a second type is a packet switch.

13. A method as defined in claim 10, wherein the signaling information exchanged between the call manager unit and the switch of a first type and the signaling information exchanged between the call manager unit and the switch of a second type are according to different protocols.

14. A method as defined in claim 13, wherein said signaling information exchanged with the switch of a first type is according to a certain protocol, said signaling information exchanged with the switch of a second type is according to a common ground protocol, said method further providing converting signaling information according to the certain protocol into signaling information according to a common ground protocol.

15. A method as defined in claim 13, wherein said signaling information exchanged with the switch of a first type is according to a first certain protocol, said signaling information exchanged with the switch of a second type is according to a second certain protocol, said method further comprising:
- converting signaling information in the first certain protocol to signaling information according to a common ground protocol;
- converting signaling information in the second certain protocol to signaling information according to a common ground protocol.

16. A machine readable medium containing a program element suitable for use on a computer having a memory, the program element allowing the computer to transmit signaling information and data between a switch of a first type and a switch of a second type, said program element being operative for:
- providing a call manager unit;
- exchanging with the call manager unit signaling information with said switch of a first type to selectively set a connection path through said switch of a first type;
- exchanging signaling with the call manager unit information with said switch of a second type to selectively set a connection path through said switch of a second type;
- establishing an inter-switch channel separate from the call manager unit for transporting a data stream from the connection path in the switch of a first type to the connection path in the switch of a second type.

17. A apparatus for transmitting signaling information and data between a switch of a first type and a switch of a second type, said apparatus comprising:
a) a call manager means having:
- means for exchanging signaling information with a switch of a first type, the exchange of signaling information permitting the call manager means to set a certain connection path through the switch of the first type;
- means for exchanging signaling information with a switch of a second type, the exchange of signaling information permitting the call manager means to set a certain connection path through the switch of the second type;
b) means for transporting a data stream between the connection paths set in the switch of a first type and the switch of a second type.

18. A telecommunication system comprising:
- a switch of a first type;
- a switch of a second type;
- a call manager unit for exchanging signaling information with said switch of a first type and said switch of a second type for selectively setting in each said switch of a first type and said switch of a second type a connection path for transporting a data stream;
- an inter-switch data channel allowing to transport a data stream between the connection paths set in the switch of a first type and the switch of a second type.

19. A PBX comprising an apparatus as defined in claim 1.

20. A PBX comprising a system as defined in claim 18.

21. A key system comprising an apparatus as defined in claim 1.

22. A key system comprising a system as defined in claim 18.

23. An apparatus as defined in claim 18, further comprising a data switching unit having:
- a first port suitable for connection to the switch of a first type for exchanging data with the switch of a first type;
- a second port suitable for connection to the switch of a second type for exchanging data with the switch of a second type ;
said data switching unit being responsive to the exchange of signaling information between the call manager unit and the switch of a first type and the switch of a second type to provide the inter-switch data channel.

24. An apparatus as defined in claims 23, wherein said call manager unit transports signaling information separate from the data stream transported by the data switching unit.

25. An apparatus as defined in claim 18 wherein the switch of a first type is a circuit switch.

26. An apparatus as defined in claim 25 wherein the switch of a second type is a packet switch.

27. An apparatus as defined in claim 18, wherein the signaling information exchanged between the call manager unit and the switch of a first type and the signaling information exchanged between the call manager unit and the switch of a second type are according to different protocols.

28. An apparatus as defined in claim 27, wherein said signaling information exchanged with the switch of a first type is according to a certain protocol, said signaling information exchanged with the switch of a second type is according to a common ground protocol, said call manager unit further comprising a protocol converter unit operative to convert signaling information in the certain protocol into signaling information according to a common ground protocol.

29. An apparatus as defined in claim 28, wherein said signaling information exchanged with the switch of a first type is according to a first certain protocol, said signaling information exchanged with the switch of a second type is according to a second certain protocol, said call manager unit further comprising:
- a first protocol converter unit operative to convert signaling information according to the first certain protocol to signaling information according to a common ground protocol;
- a second protocol converter unit operative to convert signaling information is according to the second certain protocol to signaling information according to a common ground protocol.
